# EUROPEAN PATENT SPECIFICATION

(11) **EP 3 102 386 B1**
(45) Date of publication and mention of the grant of the patent: **10.10.2018**
(21) Application number: 15702237.7
(22) Date of filing: 30.01.2015
(51) Int. Cl.: B29C 65/02, B29C 65/08, B29C 65/18, B29C 65/26, B29C 65/30, B65D 75/58

(54) **METHOD FOR PRODUCING A FLEXIBLE CONTAINER HAVING A CLOSURE DEVICE**
VERFAHREN ZUM HERSTELLEN EINES FLEXIBLEN BEHÄLTERS MIT EINER VERSCHLUSSVORRICHTUNG
PROCÉDÉ DE FABRICATION D'UN RÉCIPIENT SOUPLE DOTÉ D'UN DISPOSITIF DE FERMETURE

(30) Priority: 03.02.2014 EP 14153657
(43) Date of publication of application: 14.12.2016
(73) Proprietor: Cellpack AG, CH-5612 Villmergen (CH)
(72) Inventor: KROPF, Martin, CH-3053 Münchenbuchsee (CH)
(74) Representative: AMMANN PATENTANWÄLTE AG BERN
(86) International application number: PCT/EP2015/051914
(87) International publication number: WO 2015/114086

(56) References cited:
- WO-A1-96/21599
- WO-A1-2004/101374
- DE-A1-102005 018 343
- JP-A- 2001 240 083
- JP-A- 2006 204 610

## Description

The invention relates to a method according to the preamble of claim 1.

Flexible containers of this kind serve for receiving in particular liquid or pasty products, and the closure device includes a weld-in part having a through-going opening for dispensing the content of the container. The connection of the weld-in part to the film layers is achieved under the influence of heat whereby portions of the film layers and of the weld-in part are fused. To produce the required connection in the fused areas, pressure has to be applied to the latter and maintained for a certain time. Particularly important in this regard is the distribution of the pressure, whereby it is ensured that the resulting connection is tight, on one hand, and that the portions to be connected are not damaged or weakened, on the other hand. A particular problem in this regard is that the shape and the dimensions of the tools that are used are invariable whereas the shape and especially the dimensions of the portions to be connected vary within certain tolerances. Therefore the welding pressure built up in the closed tool will be variable and the result of the welding operation will necessarily be subject to considerable variations. If the weld-in part is too small and/or the film layers are too thin, the contact pressure in the area of the weld-in part will be insufficient, thereby resulting in an insufficient welding connection in this area. At the same time, in this situation, an excessive contact pressure and damages of the film layers may result in the areas adjacent to the weld-in part. If the weld-in part is too large, the latter or the overlying film layers may be damaged as a result of an excessive contact pressure whereas the areas of the film layers adjacent the weld-in part will not receive enough pressure and will be insufficiently welded.

According to a known method, the aforementioned problems are reduced by providing the weld-in part with salient ribs which melt off during the welding operation and fill potential gaps resulting from insufficient pressure. Similarly, the sealing tools also may be provided with surface structures in order to upset and distribute the material being welded. Another method consists in integrating elastic parts in the sealing tools in order to thus compensate for tolerances of the parts to be connected and to avoid excessive pressures in partial areas. A similar method is based on first applying one sealing jaw against an elastic support and then processing the opposite side. Combinations of the aforementioned methods have also been used.

Document WO2004101374A1 describes a flexible pouch for beverages, comprising at least one closure that is welded in between two free edges of the pouch, whereby the body of the closure is provided, at least in sections, in the shape of a truncated cone. During the welding process the closure is pressed in the direction of the pouch interior. According to document WO9621599A1 a fitment for a container of the type having sides made of flexible heat sealable material has a tubular neck. A heat sealable skirt, to which the container sides may be heat sealed, depends from an outwardly flared portion. The skirt has a heat sealable outer surface and a material thickness less than the material thickness of the neck. In the document JP2001240083A a mounting method for a container with a spout with a thin sealing wall is described. During the welding process the spout is pressed in the direction of the pouch exterior. Document DE102005018343A1 describes a film bag, comprising a cap closure, which is placed at the top and which has a spout tube. The spout tube has a funnel shaped or conical seal section to which the packing film can be sealed. Document JP2006204610A describes a method for manufacturing a medical container.

One disadvantage of the known methods is that especially when ribs or the like are used, a sheet material has to be chosen that is more resistant and/or thicker than needed for the purposes of the package. Particularly in view of the current trend towards increasingly smaller packaging units and of the fact that sheet material manufacturers offer increasingly thinner packaging films which meet the requirements of the products to be packaged, using thicker sheets merely because of the welding connections represents a substantial waste. The methods that use elastic inlays or supports entail higher requirements in heat or time since the elastic materials are poor heat conductors.

On the background of this prior art it is an object of the invention to suggest a method for producing a flexible container having a closure device by which the weld-in part is safely welded in despite variations in the dimensions of the weld-in part and/or of the film layers due to series production.

This object is achieved by the measures specified in the characterising part of claim 1.

In particular, this inventive solution offers the advantage that the cross-sectional shape of the tool, which corresponds to the cross-sectional shape of the weld-in part, and the cone angle of the tool, which corresponds to the cone angle of the weld-in part, allow feeding the weld-in part to a position inside the tool where an accurate fit and a gapless enclosure of the parts that are to be connected is achieved in the tool independently of the dimensional tolerances of the weld-in part and of the film layers.

Particular embodiments of the method are described in the dependent claims.

Exemplary embodiments of the invention will be described by way of examples hereinafter with reference to the accompanying drawings showing
- Figure 1: a perspective view of a weld-in part that is suitable for the method of the invention;
- Figure 2: a longitudinal section through a tool with film layers and a weld-in part inserted therein; and
- Figure 3: a cross-section along line III-III in Figure 2.

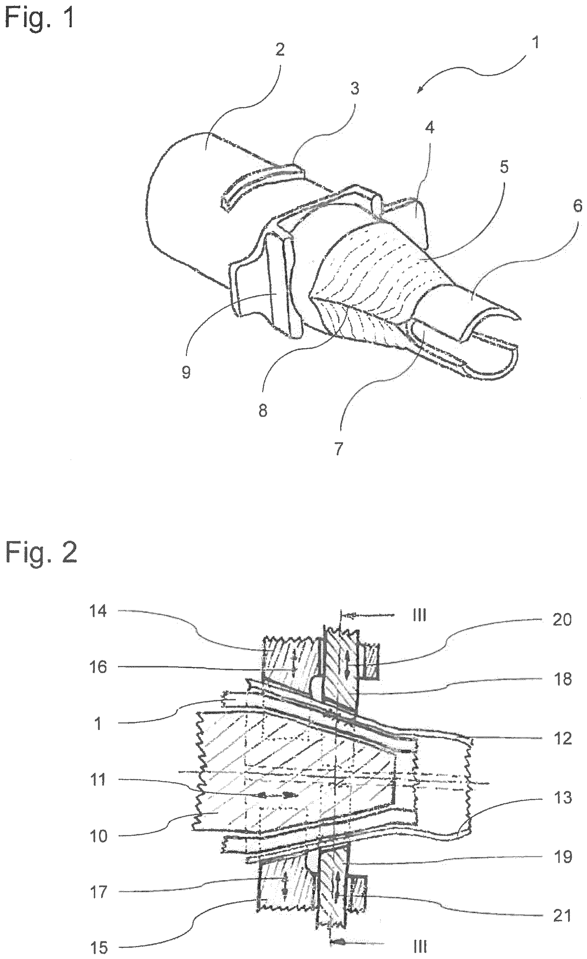

Figure 1 shows a perspective view of a weld-in part 1 that has preferably been produced in one piece from a synthetic material by injection moulding. A tubular neck 2 with a through-going opening serves for dispensing the content of a flexible packaging container equipped with weld-in part 1. On the outside of the tubular neck, a thread section 3 is shown which serves as an engagement means for a cap that closes neck 2. A flange 4 with guide surfaces 9 may be provided in view of automatically processing weld-in part 1 or the finished welded container, respectively. A sealing region 5 is conically shaped as seen in longitudinal section. Basically, the cross-section of sealing region 5 may have any shape but it is preferably larger in the direction of the film layers than perpendicularly to the film layers. In the depicted example, fins 8 are formed laterally on the sealing region in order to promote a tight welding connection in the transition areas on both sides of weld-in part 1. An optional neck 6 may be provided at the free end of sealing region 5 and may have at least one slot 7 that is intended to facilitate the extraction of a liquid content.

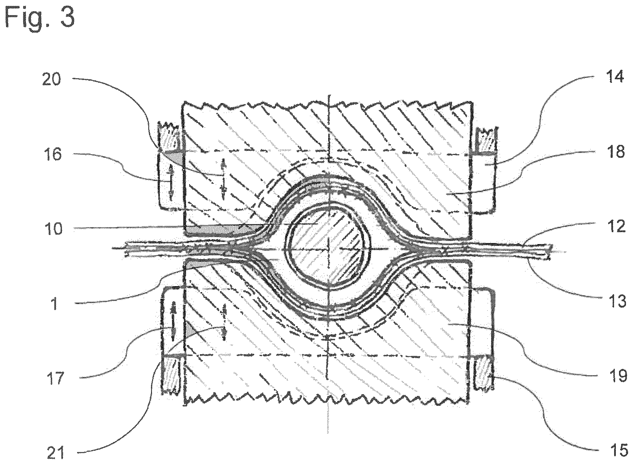

Figure 2 shows a longitudinal section of a tool assembly with a weld-in part 1 that is received between a front wall film 12 and a rear wall film 13 of a packaging pouch being manufactured, and in Figure 3 the same assembly is shown in a sectional view along line III-III in Figure 2.

Weld-in part 1 is positioned in the depicted position by a holding tool 14, 15. In the particular embodiment shown, the holding tool has a mandrel 10 that extends into the opening of weld-in part 1 and supports weld-in part 1 from the inside, which may be advantageous in the case of large weld-in parts. Also, in one embodiment, the mandrel may be made long enough to project from weld-in part 1 and thus serve as an inserting aid to position weld-in part 1 between film layers 12, 13. Ultimately, the mandrel may further be equipped with heating means to assist the welding operation. Likewise, mandrel 10 may be equipped with cooling means to allow the produced connections to be quickly cooled. Incidentally, the two film layers 12, 13 were brought into the depicted partly spread position by non-represented means, e.g. suction tools, in a preceding process step.

Two holding tool parts 14, 15 are movable towards each other in the direction of double arrows 16 and 17 from an open position to a closed position and inversely to an open position. When the holding tool parts 14, 15 are closed, they delimit a cavity whose cross-sectional geometry and cone angle exactly correspond to sealing region 5 of weld-in part 1. After closing the holding tool parts 14, 15, weld-in part 1 is moved to the right in Figure 2 until it comes to lie via the intermediate sheets 12, 13 against holding tool parts 14, 15 without play. This state can e.g. be detected by a quick increase of the feeding force of the holding tool. Now an upper sealing tool part 18 and a lower sealing tool part 19 are moved towards each other in the direction of double arrows 20, 21, and sheets 12, 13 are welded to weld-in part at the locations marked by small crosses. Sealing tool 18, 19 may further be equipped with cooling means to allow the produced welding connections to be quickly cooled. Alternatively, the arrangement of holding tools 14, 15 and sealing tools 18, 19 shown in Figure 2 may be reversed, i.e. sealing tools 18, 19 may be located closer to the edge of film layers 12, 13 than holding tools 14, 15.

Holding tool parts 14, 15 are provided with stops (not shown) which directly contact each other in the closed position without intermediate sheets 12, 13 and thus always define exactly the same interior space independently of the tolerances of weld-in part 1 and of sheets 12, 13. By inserting weld-in part 1 into this conical interior space until the parts to be connected are in close contact, the contact pressure applied to the closed tool parts can be controlled within very narrow limits.

As elements for generating heat, electric resistive heating elements may be provided. Elements for transmitting heat may e.g. be formed as channels conducting a fluid that is heated outside the tool. By vibrations, e.g. in the ultrasonic range, heat can be generated at the connections being produced. Cooling means may be arranged in the tool pair also in order to cool the produced welding connections and thus to accelerate the method. It is understood that the welding connections may alternatively be cooled in a subsequent step outside the described tools by separate cooling means.

Also, the direction of the conicity of sealing region 5 may be reversed relative to Figure 2, i.e. the larger cross-section may be located in the interior of the container. Accordingly, in this embodiment, the weld-in part is brought into contact with the tool pair by traction before the welding operation starts.

In preparation of the operations described above, film layers 12, 13 may be tack-welded to weld-in part 1 e.g. by punctual welding connections in order to avoid that up to four elements, i.e. the two film layers 12, 13, weld-in part 1, and tool parts 14, 15, need to be positioned relative to one another.

Also in preparation of the aforementioned operations, film layers 12, 13 may be previously joined to each other by weld seams. In particular, a conical edge opening may be prepared whose cone angle is adapted to the cone angle of sealing region 5. In the final welding operation according to the method described above, the previously produced weld seams are then united with the newly produced weld seams in the transition areas.

Ultimately, profiled portions, e.g. in the form of ribs, may also be provided in the described method on the tool parts and/or in sealing region 5 of weld-in part 1 in order to improve the connection of the fused materials.

### List of Reference Numerals

- 1: weld-in part
- 2: tubular neck
- 3: thread section
- 4: flange
- 5: sealing region
- 6: neck
- 7: slot
- 8: fin
- 9: guide surface
- 10: mandrel
- 11: double arrow
- 12: front sheet
- 13: back sheet
- 14: upper holding tool part
- 15: lower holding tool part
- 16: double arrow
- 17: double arrow
- 18: upper sealing tool part
- 19: lower sealing tool part
- 20: double arrow
- 21: double arrow

## Claims

1. Method for producing a flexible container having a closure device, the closure device comprising a weld-in part (1) with a through-going opening, the weld-in part (1) being positioned between two film layers (12, 13) in the edge area of the latter and brought between a two-part tool (14, 15) whose tool parts (14, 15) are capable of being moved from an open position to a closed position substantially perpendicularly to the film layers (12, 13), and the weld-in part (1) being connected to the film layers (12, 13) by the input of heat, whereat the weld-in part (1) has a sealing region (5) that is conical in longitudinal section, whereat the cross-sectional shape and the cone angle of the interior space of the tool (14, 15) in its closed position correspond to the cross-sectional shape and the cone angle of the sealing region (5), and whereat a mandrel (10) is placed in the opening of the weld-in part (1), **characterised in that** after closing the tool (14, 15) and before the input of heat the weld-in part (1) is moved parallel to the parting plane of the tool (14, 15) until it comes to lie against the tool (14, 15) via the intermediate film layers (12, 13), and **in that** axially adjacent the tool (14, 15) a further two-part tool (18, 19) is provided whose tool parts (18, 19) are capable of being moved independently of the tool (14, 15) from an open position to a closed position substantially perpendicularly to the film layers (12, 13), and **in that** the weld-in part (1) is connected to the film layers (12, 13) by the input of heat by said further two-part tool (18, 19).

2. Method according to claim 1, **characterised in that** the movement of the weld-in part (1) is stopped when a determined maximum contact pressure is reached.

3. Method according to claim 1, **characterised in that** the mandrel (10) is equipped with means for generating or transmitting heat or vibrations.

4. Method according to claim 3, **characterised in that** the mandrel (10) is equipped with cooling means.

5. Method according to one of the preceeding claims, **characterised in that** the tool (14, 15) or the further tool (18, 19) is equipped with cooling means.

6. Method according to one of the preceding claims, **characterised in that** before being inserted into the tool (14, 15), the film layers (12, 13) are connected to the weld-in part (1) by punctual tack welds.

7. Method according to one of the preceding claims, **characterised in that** before positioning the weld-in part (1), the film layers (12, 13) are joined to each other in an area that corresponds to the contour of the weld-in part (1) .

## Patentansprüche

1. Verfahren zum Herstellen eines flexiblen Behälters mit einer Verschlussvorrichtung, wobei die Verschlussvorrichtung ein Einschweissteil (1) mit einer durchgehenden Öffnung umfasst, wobei das Einschweissteil (1) zwischen zwei Folienlagen (12, 13) in deren Randbereich positioniert und zwischen ein zweiteiliges Werkzeug (14, 15) gebracht wird, dessen Werkzeugteile (14, 15) im Wesentlichen rechtwinklig zu den Folienlagen (12, 13) von einer offenen Position in eine Schliessposition bringbar sind und wobei das Einschweissteil (1) durch den Eintrag von Wärme mit den Folienlagen (12, 13) verbunden wird, wobei das Einschweissteil (1) einen im Längsschnitt konischen Schweissbereich (5) hat, wobei die Querschnittsform und der Konuswinkel des Innenraums des Werkzeugs (14, 15) in der Schliessposition der Querschnittsform und dem Konuswinkel des Schweissbereichs (5) entspricht und wobei ein Dorn (10) in der Öffnung des Einschweissteils (1) angeordnet wird, **dadurch gekennzeichnet, dass** das Einschweissteil (1) nach dem Schliessen des Werkzeugs (14, 15) und vor dem Wärmeintrag parallel zur Trennebene des Werkzeugs (14, 15) so weit bewegt wird, bis es unter Zwischenlage der Folienlagen (12, 13) am Werkzeug (14, 15) anliegt, und dass axial benachbart zum Werkzeug (14, 15) ein weiteres zweiteiliges Werkzeug (18, 19) vorgesehen ist, dessen Werkzeugteile (18, 19) unabhängig vom Werkzeug (14, 15) im Wesentlichen rechtwinklig zu den Folienlagen (12, 13) von einer offenen Position in eine Schliessposition bringbar sind, und dass das Einschweissteil (1) mittels des genannten weiteren zweiteiligen Werkzeugs (18, 19) durch den Eintrag von Wärme mit den Folienlagen (12, 13) verbunden wird.

2. Verfahren nach Anspruch 1, **dadurch gekennzeichnet, dass** die Bewegung des Einschweissteils (1) beim Erreichen einer festgelegten maximalen Anpresskraft gestoppt wird.

3. Verfahren nach Anspruch 1, **dadurch gekennzeichnet, dass** der Dorn (10) mit Mitteln zum Erzeugen oder Übertragen von Wärme oder Schwingungen ausgestattet ist.

4. Verfahren nach Anspruch 3, **dadurch gekennzeichnet, dass** der Dorn (10) mit Kühlmitteln ausgestattet ist.

5. Verfahren nach einem der vorangehenden Ansprüche, **dadurch gekennzeichnet, dass** das Werkzeug (14, 15) oder das weitere Werkzeug (18, 19) mit Kühlmitteln ausgestattet ist.

6. Verfahren nach einem der vorangehenden Ansprüche, **dadurch gekennzeichnet, dass** die Folienlagen (12, 13) vor dem Einbringen in das Werkzeug (14, 15) durch punktuelle Heftschweissungen mit dem Einschweissteil (1) verbunden werden.

7. Verfahren nach einem der vorangehenden Ansprüche, **dadurch gekennzeichnet, dass** die Folienlagen (12, 13) vor dem Positionieren des Einschweissteils (1) in einem der Kontur des Einschweissteils (1) entsprechenden Bereich miteinander verbunden werden.

## Revendications

1. Procédé de fabrication d'un récipient flexible ayant un dispositif de fermeture, le dispositif de fermeture comprenant une partie à souder (1) avec une ouverture traversante, la partie à souder (1) étant positionnée entre deux couches de film (12, 13) dans la zone du bord de celles-ci et amenée entre un outil bipartite (14, 15) dont les parties d'outil (14, 15) peuvent être amenées d'une position ouverte vers une position de fermeture substantiellement perpendiculairement aux couches de film (12, 13), et la partie à souder (1) étant reliée aux couches de film (12, 13) par l'apport de chaleur, où la partie à souder (1) a une zone de soudure (5) qui est conique en coupe longitudinale, où la forme de la section transversale et l'angle de conicité de l'intérieur de l'outil (14, 15) en position de fermeture correspondent à la forme de la section transversale et à l'angle de conicité de la zone de soudure (5), et où un mandrin (10) est placé dans l'ouverture de la partie à souder (1), **caractérisé en ce qu'**après la fermeture de l'outil (14, 15) et avant l'apport de chaleur, la partie à souder (1) est déplacée parallèlement au plan de séparation de l'outil (14, 15) jusqu'à ce qu'elle contacte l'outil (14, 15) par l'intermédiaire des couches de film (12, 13) interposées et **en ce qu'**axialement à côté de l'outil (14, 15) est pourvu un outil bipartite supplémentaire (18, 19) dont les parties (18, 19) peuvent être amenées indépendamment de l'outil (14, 15) d'une position ouverte vers une position de fermeture substantiellement perpendiculairement aux couches de film (12, 13), et **en ce que** la partie à souder (1) est reliée aux couches de film (12, 13) par l'apport de chaleur au moyen dudit outil bipartite supplémentaire (18, 19).

2. Procédé selon la revendication 1, **caractérisé en ce que** le mouvement de la partie à souder (1) est arrêté lorsqu'une pression de contact maximale est atteinte.

3. Procédé selon la revendication 1, **caractérisé en ce que** le mandrin (10) est équipé de moyens permettant de générer ou transmettre de la chaleur ou des vibrations.

4. Procédé selon la revendication 3, **caractérisé en ce que** le mandrin (10) est équipé de moyens de refroidissement.

5. Procédé selon l'une des revendications précédentes, **caractérisé en ce que** l'outil (14, 15) ou l'outil supplémentaire (18, 19) est équipé de moyens de refroidissement.

6. Procédé selon l'une des revendications précédentes, **caractérisé en ce qu'**avant d'être introduites dans l'outil (14, 15), les couches de film (12, 13) sont reliées à la partie à souder (1) par des points de soudure ponctuels.

7. Procédé selon l'une des revendications précédentes, **caractérisé en ce qu'**avant le positionnement de la partie à souder (1), les couches de film (12, 13) sont jointes l'une à l'autre dans une zone qui correspond au contour de la partie à souder (1).
